# FASCICULE DE BREVET EUROPEEN

(11) **EP 0 670 792 B1**
(45) Date de publication et mention de la délivrance du brevet: **19.05.1999**
(21) Numéro de dépôt: 94927700.8
(22) Date de dépôt: 20.09.1994
(51) Int. Cl.: B60R 16/02, H01R 35/02, H01R 13/62

(54) **CONTACTEUR TOURNANT POUR VEHICULE AUTOMOBILE**
DREHBARER SCHALTER FÜR KRAFTFAHRZEUGE
ROTATING CONTACTOR FOR MOTOR VEHICLE

(30) Priorité: 01.10.1993 FR 9311730
(43) Date de publication de la demande: 13.09.1995
(73) Titulaire: VALEO ELECTRONIQUE, 94000 Creteil (FR)
(72) Inventeur: HOFMANN, Bertrand, F-91380 Chilly-Mazarin (FR); LECOMTE, Thierry, F-91000 Evry (FR)
(74) Mandataire: Gamonal, Didier
(86) Numéro de dépôt international: FR9401092
(87) Numéro de publication internationale: WO9509744

(56) Documents cités:
- EP-A- 0 195 833
- EP-A- 0 525 839
- WO-A-91/17592
- DE-A- 3 436 968
- US-A- 4 610 564

## Description

La présente invention concerne les contacteurs tournants pour véhicules automobiles, du genre comportant deux parties coaxiales montées mobiles l'une par rapport à l'autre avec intervention de moyens de transmissions électriques entre lesdites parties.

De tels contacteurs tournants sont décrits par exemple dans les documents EP-A-0 479 567 et FR-A-2 612 851.

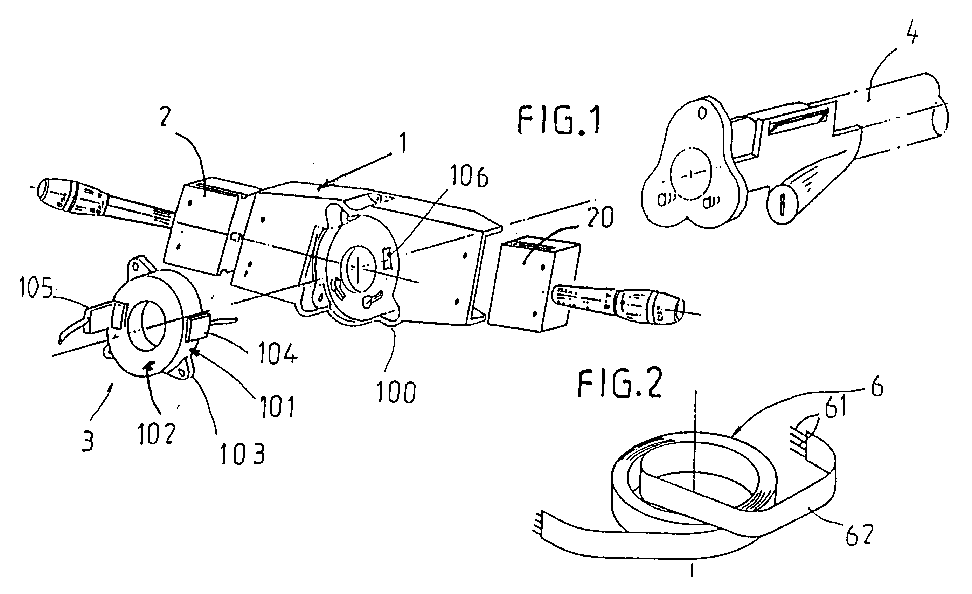

Usuellement (figure 1) l'une des parties précitées du contacteur 3, dite par commodité partie fixe 101, est destinée à être fixée à la colonne de direction 4 du véhicule, tandis que l'autre desdites parties, dite ici par commodité partie mobile 102, est destinée à être liée en rotation au volant du véhicule automobile.

Pour mémoire on rappellera que les moyens de transmissions électriques permettent de relier électriquement un ou des premiers dispositifs liés au volant du véhicule à un ou des seconds dispositifs liés à la colonne de direction 4 ou au châssis du véhicule.

Les premiers dispositifs peuvent consister par exemple en des contacteurs électriques, tels que l'avertisseur sonore, ou en un dispositif de sécurité à coussin gonflable dénommé "Air Bag" qui se gonfle en cas d'accident pour protéger le véhicule.

Ces moyens de transmissions, par exemple en forme de ruban enroulé entre les deux parties 101 et 102, permettent d'effectuer 1,75 à 3,5 tours de volant dans un sens et dans l'autre.

Ce contacteur tournant est fabriqué par un équipementier et est livré au constructeur automobile pour être monté dans ladite partie centrale du support 1.

Pour ce faire le contacteur tournant doit être livré dans sa position moyenne ou centrale afin de pouvoir effectuer, sans détérioration du contacteur, le nombre de tours de volant requis. Usuellement à cet effet on maintient les parties 101 et 102 dans cette position prédéterminée, par exemple, à l'aide de moyens mécaniques faisant appel par exemple à une vis de blocage.

En variante ce maintien est assuré par une étiquette adhésive qui se coupe lors de la première rotation du volant.

Ainsi ce contacteur est monté dans la bonne position et ne risque pas de détériorer les moyens de transmissions électriques, notamment lorsque ceux-ci comportent un ruban enroulé en spirale entre les deux parties du contacteur.

Ces dispositions ne sont pas entièrement satisfaisantes.

En effet, dans le cas où la position moyenne est assurée à l'aide de vis, cela nécessite une opération supplémentaire à effectuer par le constructeur automobile.

Lorsque le maintien en position moyenne est assuré à l'aide d'une étiquette adhésive, on risque de déchirer celle-ci lors de mauvaises manipulations, en sorte que cette disposition n'est pas extrêmement sûre.

Pour pallier ces inconvénients on a prévu dans le document US-A-4 886 460, conforme au préambule de la revendication 1, une disposition dans laquelle pour liaison en rotation temporaire de la partie fixe avec la partie mobile, des moyens de verrouillage escamotables interviennent entre lesdites parties, lesdits moyens de verrouillage comportant une première pièce escamotable portée à articulation par la partie mobile et propre à venir en prise de manière débrayable par coopération de formes avec une deuxième pièce portée par la partie fixe, ladite première pièce comportant une portion de manoeuvre propre à être actionnée par le volant du véhicule pour escamotage de ladite première pièce et libération desdites parties l'une par rapport à l'autre.

En pratique il est prévu un élément de verrouillage supporté à rotation par la partie mobile. Cet élément comporte une portion intermédiaire, une extrémité de verrouillage et une autre extrémité élastique en forme de boucle.

La portion intermédiaire comporte des pivots reçus par encliquetage dans des berceaux de la portée mobile.

Cette partie mobile est conformée pour recevoir la boucle de l'élément de verrouillage.

La présente invention a pour objet de rendre plus simple et économique les moyens de verrouillage.

Suivant l'invention ce problème est résolu par la partie caractérisante de la revendication 1.

Grâce à l'invention, la première pièce formant une pièce de blocage escamotable, le contacteur tournant peut être livré dans sa position moyenne et le constructeur automobile n'a pas d'opération supplémentaire à effectuer, le déverrouillage en rotation des deux parties du contacteur tournant l'une par rapport à l'autre s'effectuant automatiquement à la mise en position du volant. Grâce à la portion de manoeuvre, la première pièce est maintenue dans sa position escamotée ultérieurement par le volant.

On appréciera que cette disposition est d'une grande sûreté et d'une grande simplicité. En outre elle permet de réduire les temps de montage. De plus, la première pièce est obtenue aisément par moulage de la partie qui la porte, sans augmentation du nombre de pièces.

Suivant une caractéristique la portion de manoeuvre est en forme de rampe.

Grâce à cette disposition on prend en compte les dispersions de fabrication, ce qui permet d'avoir une position idéale en hauteur du volant par rapport au contacteur tournant, tout en ayant un déverrouillage certain de la pièce de blocage une fois le volant monté.

Suivant une autre caractéristique, la première pièce escamotable est élastique ou est soumise à l'action de moyens élastiques à action axiale, la sollicitant en direction de la seconde pièce pour son maintien en prise avec la seconde pièce.

Par exemple la seconde pièce présente pour ce faire de préférence une multiplicité d'encoches pour réception de la pièce escamotable et verrouillage des parties.

L'une des encoches correspond à la position moyenne du contacteur tournant et est de préférence repérée par exemple à l'aide d'un marquage.

Grâce à cette disposition on peut effectuer aisément une réparation du véhicule, par exemple dans un garage, en intervenant sur le volant. En effet, on peut démonter le volant puis le remonter sans risque d'endommager par la suite les moyens de transmission électrique du contacteur tournant, du fait de l'élasticité de la première pièce ou de l'action des moyens élastiques à action axiale, ladite première pièce venant de nouveau en prise avec la seconde pièce lorsque le volant est démonté au cours de la durée de vie du véhicule.

En variante on peut prévoir une liaison du type à cliquet. Dans tous les cas, les moyens de verrouillage selon l'invention font appel à un nombre de pièces minimum.

Dans une forme de réalisation, la première pièce est liée en rotation de manière débrayable avec la deuxième pièce par une liaison du type tenon-mortaise.

Par exemple la première pièce peut être montée à articulation sur une cheminée d'entraînement, que présente usuellement la partie mobile, la partie fixe présentant alors une pièce avec une encoche destinée à recevoir une saillie solidaire de la première pièce.

La description qui va suivre illustre l'invention en regard des dessins annexés dans lesquels :
- la figure 1 est une vue en perspective d'un contacteur tournant propre à être implanté dans un support de commutateurs fixé à la colonne de direction du véhicule
- la figure 2 est une vue en perspective d'une forme de réalisation des moyens de transmissions électriques ;
- la figure 3 est une vue partielle en perspective des moyens de verrouillage escamotables selon l'invention
- la figure 4 est une vue en coupe axiale des moyens de verrouillage de la figure 3.

Dans les figures est illustré un contacteur tournant pour véhicule automobile, du genre comportant deux parties coaxiales 101,102 montées mobiles l'une par rapport à l'autre avec intervention de moyens de transmissions électriques 6 entre lesdites parties, à savoir, une première partie, dite ici par commodité partie fixe 101, destinée à être fixée à la colonne de direction 4 du véhicule et une seconde partie, dite ici par commodité partie mobile 102, destinée à être liée en rotation au volant 7 du véhicule automobile.

Ici la partie fixe 101 est fixée à la colonne de direction 4 via un support 1 de commutateurs 2,20 placés sous le volant 7.

Ce support 1 est solidarisé à la colonne 4, par exemple par des vis, ou autres organes de fixation, et présente centralement un logement de réception du contacteur 3.

La partie fixe 101 est fixée, par exemple, par clipsage au support 1 ou tout autre moyen tels qu'un rivetage, vissage ou autre. Par exemple à la figure 1 la partie fixe 101 comporte des oreilles de fixation 103 pénétrant dans des passages complémentaires 100 du support 1 et fixées par vissage ou rivetage au support 1.

La partie mobile 102 présente une protubérance 105, d'orientation axiale, pour son entraînement en rotation par le volant 7. Il peut s'agir par exemple d'un pion pénétrant dans une ouverture complémentaire pratiquée dans une pièce solidaire du volant 7.

Ici les moyens de transmissions électriques consistent en un ruban 6 doté de fils électriquement conducteurs 61 enrobés dans un isolant électrique 62. Ce ruban 6 est enroulé en spirale à la manière d'un ressort de montre, les parties 101 et 102 étant mobiles l'une par rapport à l'autre à l'encontre du ruban.

Ce ruban 6 permet donc de réaliser des liaisons électriques ainsi que de transmettre des signaux. C'est donc par simplicité que les moyens 6 sont qualifiés ici de moyens de transmission électrique.

Les extrémités du ruban 6 pénètrent ici dans des cheminées 104 et 105, d'orientation axiale, formées respectivement dans la partie fixe 101 et la partie mobile 102. Pour ce faire, le support 1 présente un passage 106 pour la cheminée 104. La cheminée 105 forme ici la protubérance d'entraînement de la partie mobile 102.

Bien entendu la cheminée 105 peut ne pas être traversée par l'extrémité concernée du ruban 6 et servir uniquement à l'entraînement de la partie mobile 102. Dans ce cas, l'extrémité du ruban 6 sort à un autre endroit de la partie mobile 102.

Ce ruban 6 est monté dans une cavité 10 (figure 4) définie par les parties mobiles 101 et 102 de manière décrite ci-après.

Pour plus de clarté on n'a pas représenté ce ruban à la figure 4.

Bien entendu les moyens de transmissions électriques peuvent avoir une autre forme et être du type de ceux décrits dans le document FR-A-2 612 851. En variante ils peuvent consister en une bande de cuivre enroulée en spirale entre les deux parties 101,102 du contacteur tournant 3.

Toutes formes de moyens de transmissions électriques étant envisageables.

Pour plus de précision, on se reportera aux documents précités.

Pour liaison en rotation temporaire de la partie fixe 101 avec la partie mobile 102, des moyens de verrouillage escamotables 83,84 interviennent entre lesdites parties 101,102. Lesdits moyens comportent une première pièce escamotable 8 portée par la partie mobile 102 et propre à venir en prise avec une seconde pièce 40 portée par la partie fixe 101, ladite première pièce comportant une portion de manoeuvre 82 propre à être manoeuvrée par le volant 7 du véhicule pour escamotage de ladite première pièce et libération desdites parties l'une par rapport à l'autre.

Grâce à cette disposition et comme il ressort à l'évidence de la figure 4, le blocage en rotation se libère à la mise en position du volant, en effet la partie 72 solidaire dudit volant, se déplace dans le sens de la flèche F, et entre alors en contact avec la portion de manoeuvre 82, ce qui permet, en poursuivant le mouvement du volant, d'escamoter la première pièce 8.

Après montage du volant, la partie 72 reste en contact avec la portion 82, en sorte que la première pièce 8, formant pièce de blocage, est escamotée et échappe à la deuxième pièce 40. Les parties 101,102 peuvent tourner alors l'une par rapport à l'autre, la pièce 8 tournant à l'unisson avec le volant 7.

Dans ce mode de réalisation, la première pièce 8 est portée à articulation par la partie mobile 102, et s'étend en saillie axiale par rapport à la partie fixe 101 et à la partie mobile 102. Cette pièce est issue ici d'un seul tenant de la cheminée 105. Plus précisément selon l'invention la première pièce est issue de moulage avec la cheminée.

Avantageusement pour ce faire la cheminée 105 est en matière plastique et il en est de même de l'ensemble des parties fixe 101 et mobile 102. Cette cheminée 105 est propre à pénétrer dans une ouverture complémentaire 73 du volant 7 pour liaison en rotation de la partie mobile 102 avec le volant 7.

La cheminée 105 forme donc une cheminée d'entraînement, ici de forme parallélépipèdique, et présente centralement un passage rectangulaire 30 pour la partie terminale de connexion du ruban 3.

Cette première pièce 8 est montée et est formée à la faveur d'une lumière longitudinale 32 (s'étendant axialement) pratiquée dans la cheminée 105. La pièce 8 est montée à articulation sur la cheminée 105 ici à la périphérie externe de celle-ci, en sorte qu'elle a une grande longueur et est souple. Plus particulièrement la pièce 8 présente une zone d'enracinement 81 à la cheminée 105 en forme de charnière fine.

Ici cette charnière fine est obtenue en réduisant l'épaisseur de la cheminée 105 à la faveur d'une rainure 31 formée dans la partie périphérique externe de celle-ci, puis en effectuant une réduction d'épaisseur supplémentaire.

La portion de manoeuvre 82 de la pièce 8 appartient à un coin et forme une rampe. L'extrémité libre 83 de la pièce 8, de section rectangulaire, est propre à être engagée dans une encoche 84 complémentaire pratiquée dans une pièce 40 appartenant à la partie fixe 101.

En pratique on prévoit une multiplicité d'encoches 84 pour pouvoir démonter le volant et verrouiller le contacteur globalement dans sa position avant démontage du volant. L'une des encoches 84 correspond à la position moyenne du contacteur tournant et est avantageusement repérée par un marquage.

Plus précisément la largeur de l'extrémité libre 83, en forme de doigt parallélépipèdique, est globalement égale à celle de l'encoche 84, un jeu plus important existant dans le sens horizontal de la figure 4.

Cette pièce 40 de forme annulaire, tout comme les parties 101 et 102, présente centralement un manchon étagé avec un épaulement 41. Elle est liée par exemple par collage vissage ou tout autre moyen à une pièce annulaire 42 à section en forme de U, dotée d'un manchon central. Le manchon de la pièce 40 est enfilé sur le manchon central de la pièce 42 en étant lié à celui-ci. Les encoches 84 sont formées à la périphérie externe d'un flasque annulaire 43 s'étendant perpendiculairement aux manchons des pièces 40,42 et à la cheminée 105 et ce à la périphérie externe de la pièce 40.

La pièce 42 définit avec la partie mobile 102 la cavité 10, ici de section rectangulaire, à l'intérieur de laquelle est confiné le ruban 6, tandis que la deuxième pièce 40, grâce à son épaulement 41, permet de caler axialement la partie mobile 102 et forme un couvercle.

La pièce 8 est soumise à l'action d'un ressort 9 prenant appui sur la cheminée 105 et sollicitant ladite première pièce 8 en direction de la seconde pièce 40 pour son maintien en prise avec cette pièce 40, notamment en position de stockage du contacteur 3, c'est-à-dire avant son montage ou son remontage sur le véhicule.

Le ressort 9 agit donc entre la pièce 8 et la protubérance d'entraînement 105 de la partie mobile 102. Par exemple, ce ressort consiste en un ressort à boudin dont les extrémités sont montées dans des creusures formées respectivement dans la face interne concernée de l'ouverture 30 et dans la face en regard de la pièce 8.

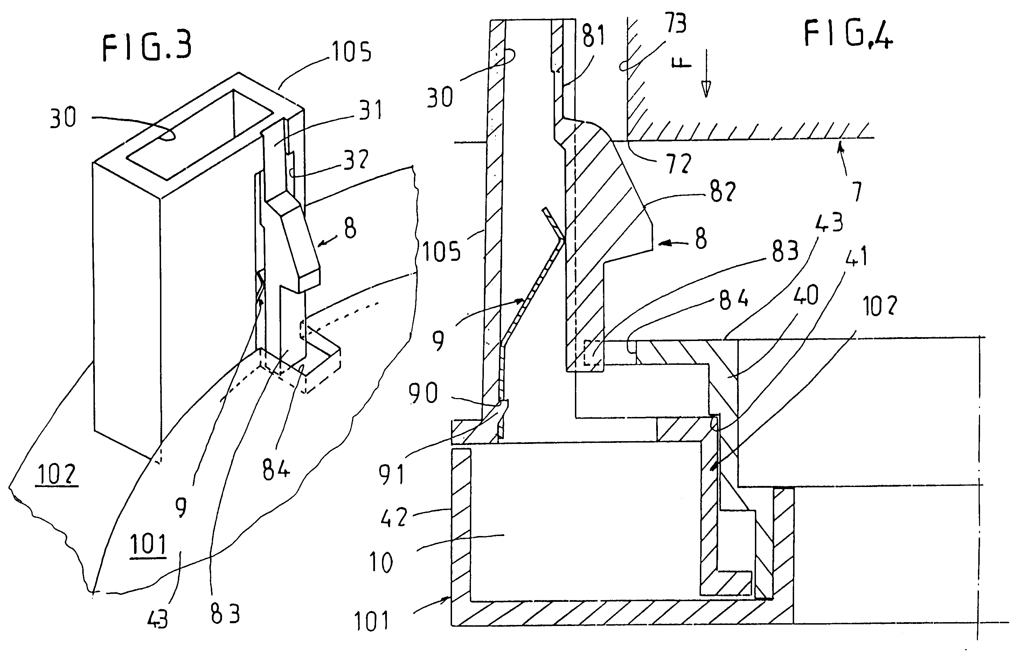

Dans les figures 3 et 4, le ressort 9 consiste en une lame élastique, dont une extrémité est agrafée à la cheminée 105, tandis que son extrémité libre présente une portion pointue, ici en forme de V, pour contact ponctuel avec la pièce 8, les deux extrémités de la lame 9 étant reliées par une portion inclinée. En variante on fixe la lame 9 par clipsage. Bien entendu l'extrémité libre de la lame 9 peut être bombée pour contact ponctuel avec la pièce 8.

Bien entendu, on peut procéder à un autre mode de fixation, tel qu'un vissage, un rivetage ou autre.

Cette lame 9 est montée dans le passage 30 et présente donc à son extrémité interne un passage 90 pour engagement sur une protubérance interne 91, que présente l'intérieur de la cheminée 105 à sa base pour agrafage de la lame 9. Cette lame est en acier à ressort, par exemple, et s'étend donc d'un bord longitudinal à l'autre bord longitudinal de l'ouverture 30. Elle est implantée au voisinage d'un des bords latéraux de l'ouverture 30 tout comme la pièce 8 afin de permettre le passage des extrémités du ruban.

Ainsi grâce au ressort 9 l'extrémité libre 83 peut pénétrer en toute certitude dans l'encoche 84 correspondante (éventuellement après un léger mouvement effectué par le garagiste) réalisant ainsi une liaison en rotation temporaire par coopération de formes du type tenon-mortaise.

Le ressort 9 permet en toute certitude une venue en prise des moyens de verrouillage 83,84, non seulement lors de la livraison en vue de la première monte du contacteur tournant, mais également ultérieurement suite à un démontage du volant et éventuellement du contacteur tournant 3, l'extrémité libre 83 pénétrant dans l'encoche 84 adjacente, et ce malgré le vieillissement des pièces du contacteur 3.

Avantageusement la cheminée 105 est en polyamide, en sorte que la pièce 8 est souple.

On appréciera que toutes ces dispositions permettent une réalisation aisée par moulage de la cheminée 105 avec sa pièce 8, dont les moyens de rampe 82 sont inclinés dans le sens axial allant du sommet du coin vers le centre du contacteur. Les bords du coin sont arrondis ou inclinés.

On appréciera que l'on effectue un blocage en rotation temporaire entre les parties 101 et 102 de manière simple et en ajoutant une unique pièce supplémentaire, à savoir le ressort 9. En outre, les bords longitudinaux de l'ouverture 32 constituent des butées de protection, qui limitent la déformation de la pièce 8.

Bien entendu la présence du ressort 9 n'est pas obligatoire. A cet effet, on peut s'arranger pour incliner au départ la pièce 8, en sorte que celle-ci vienne en prise avec l'encoche 84 de manière certaine.

Bien entendu tout cela dépend de la matière de la cheminée 105. En choisissant une matière adéquate la cheminée 81 peut avoir dans le temps l'élasticité requise pour venir en prise avec l'encoche 84.

Dans tous les cas, un escamotage est rendu possible par coopération du volant 7 (sa partie 72, par exemple le moyeu du volant 7), avec la rampe inclinée 82.

Cette rampe 82 permet de respecter une distance précise entre le volant 7 et la pièce 40 malgré les inévitables tolérances de fabrication.

Bien entendu l'inclinaison de la rampe 82 dépend des applications et est déterminée en sorte que la pièce de blocage 8 s'échappe de l'encoche 84, ici de forme rectangulaire, lorsque l'on descend le volant 7.

Bien entendu la présente invention n'est pas limitée à l'exemple de réalisation décrit. En particulier, la pièce 8 peut être constituée par la lame 9 profilée en conséquence c'est-à-dire présentant une portion avec une rampe 82 et une extrémité libre propre à s'engager dans l'encoche 84. Dans ce cas la lame présente deux branches reliées entre elles par une partie arrondie par exemple.

Cette lame n'a pas besoin d'être fixée dans ce cas à la cheminée 105.

Bien entendu on peut prévoir dans la cheminée un épaulement pour appui de l'extrémité interne de la branche du ressort 9 accolée au bord de l'ouverture 30. Par exemple, on peut utiliser la face supérieure de la protubérance 91 pour former ledit épaulement.

Bien entendu cette disposition est applicable pour le maintien de la lame 9 des figures 3 et 4.

En variante le ressort 9 peut être un ressort du type "pince à linge" à fil rond avec un enroulement dans sa partie supérieure, une zone en forme de rampe 82 et une extrémité libre adaptée à engrener avec l'encoche 84. Dans ce cas, on fixe par exemple l'autre extrémité du ressort 9 à la cheminée 105.

Bien entendu l'encoche 84 et l'extrémité libre, en forme de doigt, de la pièce 8 peuvent être de forme semi-circulaire et au lieu d'une liaison du type tenon-mortaise, on peut envisager une autre liaison à coopération de formes entre la première et la seconde pièce du dispositif de verrouillage escamotable 83,84.

Par exemple la pièce 8 peut présenter à son extrémité libre plusieurs crans venant en prise avec des crans complémentaires formés localement à la périphérie externe du flasque 43 de la pièce 40.

On réalise ainsi une liaison du type à cliquet.

En variante on peut prévoir une disposition du type à bascule, la pièce 8 étant articulée en son milieu à la cheminée 105. Dans ce cas, la pièce 8 présente à l'une de ses extrémités les moyens de rampe 82 propres à coopérer avec le volant 7, et à son autre extrémité un pion saillant pénétrant dans une ouverture du rebord 43 de la pièce 40.

Ainsi lorsque l'on monte le volant 7, la pièce 8 bascule et le pion de blocage échappe à son ouverture associée pour déverrouillage des deux parties 101,102.

Dans tous les cas, la première pièce 8 est liée de manière débrayable à la seconde pièce.

La pièce 8 ne s'étend pas forcément verticalement mais peut s'étendre horizontalement.

En effet à la figure 4 la pièce 8 serait alors formée horizontalement dans la pièce 40 et présenterait alors une extrémité libre propre à pénétrer dans au moins une encoche pratiquée dans la partie 102 de la cheminée 105. Le volant présenterait alors par exemple une tige destinée à venir en contact avec la rampe 82 pour escamoter celle-ci, ladite rampe étant inclinée en partant de son sommet vers l'extérieur du commutateur.

Dans ce cas, il faut inverser les structures, la partie 102 étant fixe, sans liaison avec le volant 7, et la pièce 40 mobile en étant liée en rotation au volant 7, par exemple par un pion d'entraînement.

L'encoche correspondant à la position moyenne du contacteur tournant pourrait être formée par exemple dans la cheminée de passage de l'extrémité du ruban 6.

Bien entendu l'encoche peut être réalisée en un autre endroit.

La pièce de blocage 8 n'est pas forcément portée par la cheminée 105. Elle peut être portée par une potence ou portique spécifique d'entraînement de la partie mobile par le volant.

Bien entendu le choix de la matière des pièces 40 et 105 dépend des applications et notamment de la souplesse souhaitée pour la première pièce 8.

Enfin on peut inverser les structures dans les figures 3 et 4, la partie 102 portant les encoches 84 en étant alors fixe, tandis que la partie 101 serait mobile (liée en rotation au volant) et porterait la pièce 8 et la cheminée 105. C'est toujours la partie mobile qui porte la pièce de blocage.

## Revendications

1. Contacteur tournant pour véhicule automobile, du genre comportant deux parties coaxiales (101,102) montées mobiles l'une par rapport à l'autre avec intervention de moyens de transmissions électriques (6) entre lesdites parties, à savoir, une première partie, dite ici par commodité partie fixe (101), destinée à être fixée à la colonne de direction (4) du véhicule et une seconde partie, dite ici par commodité partie mobile (102), destinée à être liée en rotation au volant (7) du véhicule automobile, dans lequel, pour liaison en rotation temporaire de la partie fixe (101) avec la partie mobile (102), des moyens de verrouillage escamotables (83,84) interviennent entre lesdites parties (101,102) lesdits moyens de verrouillage comportant une première pièce escamotable (8) portée à articulation par la partie mobile (102) et propre à venir en prise de manière débrayable par coopération de formes avec une seconde pièce (40) portée par la partie fixe (101), ladite première pièce comportant une portion de manoeuvre (82) propre à être manoeuvrée par le volant (7) du véhicule pour escamotage de ladite première pièce et libération desdites parties l'une par rapport à l'autre caractérisé en ce que la première pièce (8) est issue de moulage d'une cheminée d'entraînement (105) d'orientation axiale que présente la partie mobile (102) pour son entraînement en rotation par le volant (7).

2. Contacteur selon la revendication 1, caractérisé en ce que la portion de manoeuvre (82) est en forme de rampe.

3. Contacteur selon la revendication 1 ou 2 caractérisé en ce que la première pièce 8 est liée de manière débrayable avec la deuxième pièce (40) par une liaison du type tenon-mortaise.

4. Contacteur selon l'une quelconque des revendications 1 à 3, caractérisé en ce que la première pièce (8) est élastique.

5. Contacteur selon l'une quelconque des revendications 1 à 3, caractérisé en ce que la première pièce (8) est soumise à l'action d'un ressort (9) sollicitant ladite première pièce en direction de la seconde pièce (40) pour son maintien en prise avec celle-ci.

6. Contacteur selon la revendication 5, caractérisé en ce que ledit ressort (9) consiste en une lame profilée monté par agrafage sur la partie fixe (101).

7. Contacteur selon l'une quelconque des revendications 1 à 6 caractérisé en ce que la première pièce (8) est montée à articulation à la périphérie externe de la cheminée (5).

8. Contacteur selon la revendication 7, caractérisé en ce que la première pièce (8) est issue de la cheminée d'entraînement (105) à la faveur d'une fente (32) pratiquée dans celle-ci.

9. Contacteur selon la revendication 8, caractérisé en ce que la première pièce (8) se raccorde par une charnière fine à ladite cheminée (105).

10. Contacteur selon la revendication 9, caractérisé en ce que la charnière fine est obtenue à la faveur d'une rainure (31) formée à la périphérie externe de la cheminée (105).

11. Contacteur selon l'une quelconque des revendications 1 à 10, caractérisé en ce que la première pièce (8) présente un coin sur lequel est formée une rampe (82) constituant ladite portion de manoeuvre.

12. Contacteur selon la revendication 11, caractérisé en ce que l'extrémité libre de la première pièce (8) est de section rectangulaire et est propre à pénétrer dans une encoche complémentaire formée dans la seconde pièce (40).

13. Contacteur selon l'une quelconque des revendications 1 à 12, caractérisé en ce que la première pièce (8) est formée à la faveur d'une lumière longitudinale pratiquée dans la cheminée (105).

14. Contacteur selon l'une quelconque des revendications 1 à 13 caractérisé en ce que la cheminée (105) est en matière plastique.

## Claims

1. Rotary contactor for a motor vehicle, of the type having two coaxial parts (101, 102) mounted so as to be able to move with respect to each other with the intervention of electrical transmission means (6) between the said parts, namely a first part, referred to here for convenience as the fixed part (101), intended to be fixed to the steering column (4) of the vehicle, and a second part (here referred to for convenience as the movable part (102), intended to be connected with respect to rotation to the steering wheel (7) of the motor vehicle, in which, for temporary connection with respect to rotation of the fixed part (106) with the movable part (102), retractable locking means (83, 84) acting between the said parts (101, 102), the said locking means having a first retractable piece (8) carried for articulation by the movable part (102) and able releaseably to come into engagement, through cooperation of shapes, with a second piece (40) carried by the fixed part (101), the said first piece having a manoeuvring portion (82) able to be manoeuvred by the steering wheel (7) of the vehicle for retracting the said first piece and releasing the said parts with respect to each other, characterised in that the first piece (8) is moulded in one piece with an axially oriented drive member which the movable part (102) has for its driving in rotation by the steering wheel (7).

2. Contactor according to Claim 1, characterised in that the manoeuvring portion (82) is in the form of a ramp.

3. Contactor according to Claim 1 or 2, characterised in that the first piece (8) is disengagably connected with the second piece (40) by a connection of the mortise and tenon type.

4. Contactor according to any one of Claims 1 to 3, characterised in that the first piece (8) is elastic.

5. Contactor according to any one of Claims 1 to 3, characterised in that the first piece (8) is subjected to the action of a spring (9) forcing the said first piece in the direction of the second piece (40) for holding it in engagement therewith.

6. Contactor according to Claim 5, characterised in that the said spring (9) consists of a profiled blade mounted by clamping on the fixed part (101).

7. Contactor according to any one of Claims 1 to 6, characterised in that the first piece (8) is mounted for articulation on the external periphery of the member (5).

8. Contactor according to Claim 7, characterised in that the first piece (8) issues from the drive member (105) by means of a slot (32) formed therein.

9. Contactor according to Claim 8, characterised in that the first piece (8) is connected by a fine hinge to the said member (105).

10. Contactor according to Claim 9, characterised in that the fine hinge is obtained by means of a groove (31) formed at the external periphery of the member (105).

11. Contactor according to any one of Claims 1 to 10, characterised in that the first piece (8) has a wedge on which there is formed a ramp (82) constituting the said manoeuvring portion.

12. Contactor according to Claim 11, characterised in that the free end of the first piece (8) has a rectangular cross section and is able to enter a complementary notch formed in the second piece (4).

13. Contactor according to any one of Claims 1 to 12, characterised in that the first piece (8) is formed by means of a longitudinal aperture formed in the member (105).

14. Contactor according to any of claims 1 to 13, characterised in that the menber (105) is in plastic.

## Patentansprüche

1. Drehbarer Schalter für Kraftfahrzeuge, umfassend zwei koaxiale Teile (101, 102), die im Verhältnis zueinander beweglich unter Einfügung von elektrischen Übertragungsmitteln (6) zwischen den besagten Teilen gelagert sind, und zwar einen hier der Einfachheit halber als ortsfester Teil (101) bezeichneten ersten Teil, der zur Befestigung an der Lenksäule (4) des Kraftfahrzeugs bestimmt ist, und einen hier der Einfachheit halber als beweglicher Teil (102) bezeichneten zweiten Teil, der für die drehfeste Verbindung mit dem Lenkrad (7) des Kraftfahrzeugs bestimmt ist, wobei zur vorübergehenden Drehverbindung des ortsfesten Teils (101) mit dem beweglichen Teil (102) versenkbare Verriegelungsmittel (83, 84) zwischen den besagten Teilen (101, 102) zum Einsatz kommen, wobei die besagten Verriegelungsmittel ein versenkbares erstes Element (8) umfassen, das gelenkig am beweglichen Teil (102) gelagert ist und durch formschlüssiges Zusammenwirken ausrückbar mit einem zweiten Element (40) in Eingriff kommen kann, das am ortsfesten Teil (101) gelagert ist, wobei das besagte erste Element einen Betätigungsabschnitt (82) umfaßt, der zum Versenken des besagten ersten Elements und zur Freigabe der besagten Teile im Verhältnis zueinander durch das Lenkrad (7) des Fahrzeugs betätigt werden kann , **dadurch gekennzeichnet**, daß das erste Element (8) einstückig an einem axial ausgerichteten Mitnahmeschacht (105) angeformt ist, den der bewegliche Teil (102) für seine drehende Mitnahme durch das Lenkrad (7) aufweist.

2. Schalter nach Anspruch 1 , **dadurch gekennzeichnet**, daß der Betätigungsabschnitt (82) rampenförmig ausgebildet ist.

3. Schalter nach Anspruch 1 oder 2 , **dadurch gekennzeichnet**, daß das erste Element (8) durch eine Nut-Zapfen-Verbindung ausrückbar mit dem zweiten Element (40) verbunden ist.

4. Schalter nach einem der Ansprüche 1 bis 3 , **dadurch gekennzeichnet**, daß das erste Element (8) elastisch ist.

5. Schalter nach einem der Ansprüche 1 bis 3 , **dadurch gekennzeichnet**, daß das erste Element (8) der Wirkung einer Feder (9) ausgesetzt ist, die das besagte erste Element in Richtung des zweiten Elements (40) beaufschlagt, um es mit diesem in Eingriff zu halten.

6. Schalter nach Anspruch 5 , **dadurch gekennzeichnet**, daß die besagte Feder (9) aus einer profilierten Lamelle besteht, die durch Anfalzung am ortsfesten Teil (101) angebracht ist.

7. Schalter nach einem der Ansprüche 1 bis 6 , **dadurch gekennzeichnet**, daß das erste Element (8) gelenkig am äußeren Umfang des Schachts (5) gelagert ist.

8. Schalter nach Anspruch 7 , **dadurch gekennzeichnet**, daß das erste Element (8) aus dem Mitnahmeschacht (105) mittels eines in diesen eingearbeiteten Schlitzes (32) herausgearbeitet ist.

9. Schalter nach Anspruch 8 , **dadurch gekennzeichnet**, daß sich das erste Element (8) durch ein dünnes Drehgelenk an den besagten Schacht (105) anschließt.

10. Schalter nach Anspruch 9 , **dadurch gekennzeichnet**, daß das dünne Drehgelenk mittels einer am äußeren Umfang des Schachts (105) ausgebildeten Nut (31) ausgeführt ist.

11. Schalter nach einem der Ansprüche 1 bis 10, **dadurch gekennzeichnet**, daß das erste Element (8) einen Keil aufweist, an dem eine Rampe (82) ausgebildet ist, die den besagten Betätigungsabschnitt bildet.

12. Schalter nach Anspruch 11 , **dadurch gekennzeichnet**, daß das freie Ende des ersten Elements (8) einen rechteckigen Querschnitt aufweist und in eine entsprechende Ausnehmung eindringen kann, die im zweiten Element (40) ausgebildet ist.

13. Schalter nach einem der Ansprüche 1 bis 12, **dadurch gekennzeichnet**, daß das erste Element (8) mittels eines in den Schacht (105) eingearbeiteten Langlochs ausgebildet ist.

14. Schalter nach einem der Ansprüche 1 bis 13, **dadurch gekennzeichnet**, daß der Schacht (105) aus Kunststoff besteht.
